# EUROPÄISCHE PATENTSCHRIFT

(11) **EP 0 723 670 B1**
(45) Veröffentlichungstag und Bekanntmachung des Hinweises auf die Patenterteilung: **23.01.2002**
(21) Anmeldenummer: 95928434.0
(22) Anmeldetag: 17.08.1995
(51) Int. Cl.: G02B 5/04

(54) **VERFAHREN ZUR HERSTELLUNG VON PRISMEN, INSBESONDERE VON MIKROPRISMEN UND STRAHLUNGSTEILERN**
PROCESS FOR MANUFACTURING PRISMS, IN PARTICULAR MICROPRISMS AND BEAM SPLITTERS
PROCEDE DE FABRICATION DE PRISMES, NOTAMMENT DE MICROPRISMES ET DE SEPARATEURS DE RAYONNEMENT

(30) Priorität: 17.08.1994 DE 4429080
(43) Veröffentlichungstag der Anmeldung: 31.07.1996
(73) Patentinhaber: TECHNOGLAS NEUHAUS GmbH, 98724 Neuhaus (DE)
(72) Erfinder: GRÄFE, Günter, D-07774 Camburg (DE)
(74) Vertreter: Kossobutzki, Walter, Dipl.-Ing.(FH)
(86) Internationale Anmeldenummer: DE9501081
(87) Internationale Veröffentlichungsnummer: WO9605525

(56) Entgegenhaltungen:
- US-A- 3 254 556
- PATENT ABSTRACTS OF JAPAN vol. 17, no. 387 (P-1576) 20. Juli 1993 & JP,A,05 066 303 (FUJITSU) 19. März 1993 in der Anmeldung erwähnt

## Beschreibung

Die Erfindung betrifft ein Verfahren zur Herstellung von Prismen, insbesondere von Mikroprismen und Strahlungsteilern, mit Abmessungen bis in den µm-Bereich hinein. Mikroprismen dienen zum Beispiel zur Strahlumlenkung in Endoskopen und zur Einkopplung von Licht in mikrooptische oder mikroelektronische Strukturen. Die Strahlungsteiler bestehen aus mindestens zwei zusammengesetzten Glasteilen prismatischer Form, wobei sich zwischen den Kontaktflächen der Teile eine dünne teildurchlässige Schicht befindet.

Das US-Patent 3,254,556 beschreibt ein Verfahren zur Herstellung von Mikroprismenplatten, bei dem mehrere planparallele Platten mit ihren Plattenflächen übereinander gestapelt und die Platten so gegeneinander verschoben werden, dass ein Körper mit parallelogrammartigen Umriß entsteht. Die Platten werden in dieser verschobenen Lage gegeneinander fixiert. Anschließend wird der so entstandene Körper zersägt, wobei Sägeebenen parallel zu der eine treppenförmige Oberflächenstruktur aufweisenden schrägen Seitenfläche des parallelogrammförmigen Körpers verlaufen. Auf diese Weise wird aus dem Block von gegeneinander verschobenen planparallelen Platten eine Vielzahl von Mikroprismenplatten gewonnen.

Aus der japanischen Druckschrift JP 5 - 66 303 ist ein Verfahren zur Herstellung von als Strahlteiler zu verwendenden Prismen bekannt, bei dem zunächst eine Mehrzahl von rechteckigen planparallelen Platten hergestellt wird. Auf die Plattenflächen der - einzelnen Platten werden dünne Schichten dielektrischer Materialien aufgebracht, die später der Strahlteilung dienen. Durch Aufeinanderstapeln mehrerer Platten auf ihren Plattenflächen wird anschließend zunächst ein rechteckförmiger Block gebildet, bei dem die Platten an zwei ihrer Umfangsflächen und an ihren Plattenflächen ausgerichtet sind. Die Platten des derart gebildeten rechteckförmigen Blocks werden entlang ihrer Plattenflächen um eine der Plattendicke entsprechende Strecke gegeneinander verschoben, so dass ein Körper mit parallelogrammförmigen Querschnitt entsteht. Bei einem anschließenden ersten Sägevorgang werden die durch die Schräganordnung der Platten gebildeten treppenförmigen Vorsprünge auf den einen Seitenfläche des parallelogrammförmigen Körpers entfernt, so dass hier eine durchgehende glatte Fläche entsteht, die im Anschluß an den Schneidvorgang poliert wird. Mit dieser Fläche wird der parallelogrammförmige Körper auf einer Hilfsplatte fixiert, so dass er einem wieteren Sägevorgang unterzogen werden kann. Dabei verlaufen die Sägeschnitte senkrecht zur Ebene der Hilfsplatte entlang der Linien, an denen die Strahlteiler-Schichten zwischen den Platten auf der Hilfsplatte auftreffen. Die so gewonnenen plattenartigen Elemente werden in zwei weiteren Sägevorgängen so zerteilt, dass würfelförmige Strahlteiler-Prismen entstehen. Diese Vorgehensweise ist bei Strahlteilerwürfeln mit allgemein gebräuchlichen Abmessungen durchführbar, die als einzelnes Bauelement noch handhabbar und bearbeitbar sind, versagt jedoch bei mikrooptischen Bauelementen.

Neue Anwendungsmöglichkeiten in der Mikrooptik und der Optoelektronik erfordern preisgünstige Mikroprismen und Strahlungsteiler in großer Stückzahl. Der Erfindung liegt deshalb die Aufgabe zugrunde, Prismen, insbesondere Mikroprismen und Strahlungsteiler wesentlich kostengünstiger und wesentlich kleinere optische Bauelemente als bisher üblich mit einem vertretbaren Aufwand herzustellen. Die Mikroprismen und Strahlungsteiler sollen hohe Anforderungen an die Genauigkeit erfüllen.

Diese Aufgabe wird durch die Merkmale des Anspruches 1 gelöst. Die Unteransprüche 2 bis 10 sind vorteilhafte Ausgestaltungen des Verfahrens nach Anspruch 1. Durch die Erfindung können Prismen, insbesondere Mikroprismen oder Strahlungsteiler in sehr variabler geometrischer Gestalt kostengünstig hergestellt werden. Die Herstellung der Prismen erfolgt aus planparallelen rechteckigen Platten in mehreren Verfahrensschritten, die teilweise mit unterschiedlichen Parametern, zum Beispiel Winkeleinstellungen, mehrfach wiederholt werden können.

Ausgangsmaterial für die Prismen sind rechteckförmige Platten mit beidseitig planen parallelen Plattenflächen. Es ist ausreichend, wenn die Seitenflächen der Platten zugeschnitten sind. Die Seitenmaße der Platten sollten vergleichsweise groß gewählt werden. Je größer die Breite b der Seitenfläche der Platten auf der Auflagefläche ist, desto größer ist die Anzahl der Mikroprismen, die in einem Prozeß erhalten werden können.

Je größer die Höhe h ist, desto größer ist die Zyklenzahl, für die ein Satz Platten zur Herstellung von Mikroprismen genutzt werden kann. Je größer die Höhe h ist, desto genauer lassen sich die Prismenwinkel einhalten.
Die Plattenflächen sind in der Regel feingeschliffen. Sollen die Platten durch

Ansprengen gehaltert werden und/oder Teile der Plattenflächen optische Funktionen erfüllen, werden die Plattenflächen zusätzlich poliert.
Eine größere Anzahl Platten werden an ihren Plattenflächen zu einem rechteckförmigen Block fixiert, wobei die einzelnen Platten nach mindestens zwei Seitenflächen und den Plattenflächen ausgerichtet werden.
Zur Erzielung einer größtmöglichen Genauigkeit ist es vorteilhaft, wenn die Seitenfläche, die die Auflagefläche ist, im rechten Winkel zu den Plattenflächen bearbeitet wird, wobei zwischen den Plattenflächen und der Auflagefläche eine scharfe Kante entsteht.
Die Anzahl der miteinander verkitteten Platten ergibt die Länge des Blocks.
Die Fixierung der Platten als Block erfolgt mittels eines schmelzfähigen Halterungsmittels oder durch Ansprengen. Beim Ansprengen der Plattenflächen wird eine hohe Genauigkeit der Prismenwinkel erreicht.
Im einfachsten Fall erfolgt beim Zusammenstellen des Blocks eine Ausrichtung aller Platten des Blocks, wobei alle Plattenflächen in einem Winkel α₁, der von der Plattenfläche und einer planen Oberfläche einer Ausrichtplatte, die Bestandteil einer Winkel-Einstell-Vorrichtung ist, eingeschlossen ist, ausgerichtet sind. Kanten, die durch die Plattenflächen und die Auflageflächen gebildet werden, liegen auf der Oberfläche der Ausrichtplatte an.
Die größte Genauigkeit der Lage wird erreicht, wenn an dem Block vor der Ausrichtung mit dem Winkel α₁ eine scharfe Kante hergestellt wurde. Bei jeder Ausrichtung der Platten mit dem Winkel α auf der Oberfläche der Ausrichtplatte wird die scharfe Kante angelegt.
In der Winkellage werden die Platten des verschobenen Blocks fixiert.
Mehrere derart verschobene Blöcke werden mit der Seite ihrer Deckflächen auf einen Trägerkörper gekittet und durch Schleifen und Polieren auf der Seite der Auflageflächen bearbeitet. Es entstehen erste optisch wirksame Flächen der Prismen.

Es erfolgt eine mehrfache Wiederholung der Ausrichtung der Platten mit jeweils verschiedenen Winkeleinstellungen α zur Herstellung zweiter optisch wirksamer Flächen und weiterer Flächen durch Schleifen und Polieren.
Die Neuordnung der Platten erfolgt nach dem Erwärmen des Blocks durch Verschieben der einzelnen Platten in der Winkel-Einstell-Vorrichtung oder durch Vereinzeln der Platten des Blocks und erneutes Ansprengen der Plattenflächen.
Nachdem auf der Seite der Auflagefläche und/oder auf der Seite der Deckfläche alle optische wirksamen Flächen hergestellt sind, erfolgt eine Neuordnung der Platten des Blocks, wobei alle Plattenflächen in einem Winkel β, der von der Plattenfläche und einer planen Oberfläche einer Hilfsplatte eingeschlossen ist, angeordnet werden. Wenn der Winkel β gleich 90° ist, entspricht die Dicke jeder Platte der Hypothenuse des späteren Prismas.
Die Hilfsplatte wird an die Seite der optisch wirksamen Flächen der Platten mittels eines Halterungsmittels gekittet. Dabei liegen die vorstehenden Formen jeder Platte (ihre vorstehenden Spitzen) auf der Oberfläche der Hilfsplatte an.
Nachfolgend erfolgt das Abschneiden von Prismenstreifen in einem Abstand a von der Oberfläche der Hilfsplatte, parallel zu dieser.
Nach dem Abschneiden von Prismenstreifen in einem Abstand a von der Oberfläche der Hilfsplatte werden im Bedarfsfall die freiliegenden Schnittflächen (Hypothenuse) der Prismenstreifen im Verbund mit der Hilfsplatte durch Schleifen und Polieren bearbeitet.
Aus den Prismenstreifen werden durch parallele Sägeschnitte, die in einem Winkel γ zum Prismenstreifen liegen, Prismen erhalten. Vorzugsweise erfolgen die Sägeschnitte im rechten Winkel zum Prismenstreifen. Die Hilfsplatte wird in einem Fall von der Seite der Prismenstreifen her nur angesägt. Das Ablösen der Prismen von der Hilfsplatte erfolgt durch Einlegen in ein Lösungsmittel für das Halterungsmittel.

In einem zweiten Fall wird die Hilfsplatte mit den Prismenstreifen durchgesägt. Die die einzelnen Prismen tragenden Streifen werden so auf einem Trägerkörper befestigt, daß die bisher nicht bearbeitbaren Flächen (Dreiecksflächen) durch Schleifen und/oder Polieren bearbeitet werden. Danach erfolgt das Ablösen der Prismen von den Streifen. Es ist vorteilhaft, wenn im Zuge der Herstellung des Blocks aus den Platten zusätzlich zur Auflagefläche eine Deckfläche und/oder eine Ausrichtfläche durch Feinschleifen oder durch Feinschleifen und Polieren so bearbeitet werden, daß diese Fläche im rechten Winkel zu den Plattenflächen sind.
Die bearbeitete Deckfläche ist parallel zur Auflagefläche. Durch die Symmetrie der Auflagefläche und der Deckfläche infolge der Winkelausrichtung aller Platten in eine Winkelstellung α kann zusätzlich zur Seite der Auflagefläche die Seite der Deckfläche bearbeitet werden. An die Vielzahl der Blöcke, die auf einen Trägerkörper gekittet sind, wird zuerst eine optisch wirksame Fläche auf der Seite der Auflageflächen hergestellt. Nach dem Umkitten auf die Seite der Auflageflächen auf dem Trägerkörper wird nachfolgend eine vorzugsweise gleiche optisch wirksame Fläche auf der Seite der Deckfläche angearbeitet. Dieser Vorgang wird für jede Winkelstellung α wiederholt, um vielflächige Prismen zu erhalten.
Weiterhin wird an die der Auflagefläche gegenüberliegende Deckfläche eine Hilfsplatte gekittet. Auch hier erfolgt ein Abschneiden (Sägeschnitt) von Prismenstreifen in einem Abstand a von der Oberfläche der Hilfsplatte und es folgen die oben beschriebenen weiteren Schritte.

Mit Hilfe des erfindungsgemäßen Verfahrens können Prismen, insbesondere Mikroprismen vergleichsweise kostengünstig und in hoher Qualität hergestellt werden. Die erfindungsgemäße Technologie sichert eine sehr gute Materialverwertung und hohe Ausbeuten guter Teile. Große Stückzahlen können gegenüber den bekannten Verfahren vergleichsweise preiswert hergestellt werden.

Strahlungsteiler werden nach der oben beschriebenen Vorgehensweise erhalten, wenn jeweils zwei einzelne Platten nicht verschiebbar miteinander verbunden werden, ein Plattenpaar bilden und eine Vielzahl dieser Plattenpaare verschiebbar und lösbar miteinander verbunden werden.
Die feste Verbindung der zwei zu einem Plattenpaar gehörigen Platten erfolgt zum Beispiel durch einen wärmebeständigen Kitt zwischen den Plattenflächen. Zwischen den starr miteinander verbundenen Plattenflächen ist eine dünne Schicht eingebettet, die eine Teilung des einfallenden Strahlenbündels bewirkt.
Die dünne Schicht wird beispielsweise durch Aufdampfen auf eine Plattenfläche hergestellt. Die aufgekittete zweite Plattenfläche schützt die empfindliche dünne Schicht während der nachfolgenden Bearbeitungsschritte sicher vor Beschädigungen.

Die einzelnen Platten eines Plattenpaares können entsprechend des Verwendungszweckes des Strahlungsteilers eine gleiche Dicke haben - zum Beispiel bei Verwendung als Strahlteilerwürfel - oder unterschiedlich dick sein - zum Beispiel Verwendung als Strahlteiler im binokularen Tubus.

### Ausführungsbeispiel

Die Erfindung wird nachfolgend an Hand von Figuren beschrieben. Es zeigen:
- Figur 1:: Platte
- Figur 2:: Block senkrecht ausgerichtet
- Figur 3:: Verschobener Block, Winkel α₁
- Figur 4:: Verschobener Block, Winkel α₂
- Figur 5:: Block, ausgerichtet, mit angekitteten Hilfsplatten
- Figur 6:: Prismenstreifen auf Hilfsplatte
- Figur 7:: Durch Sägeschnitte vereinzelte Prismen
- Figuren 8 bis 15:: Prismenformen
- Figur 16:: Strahlungsteiler
- Figur 17:: Ausrichtvorrichtung

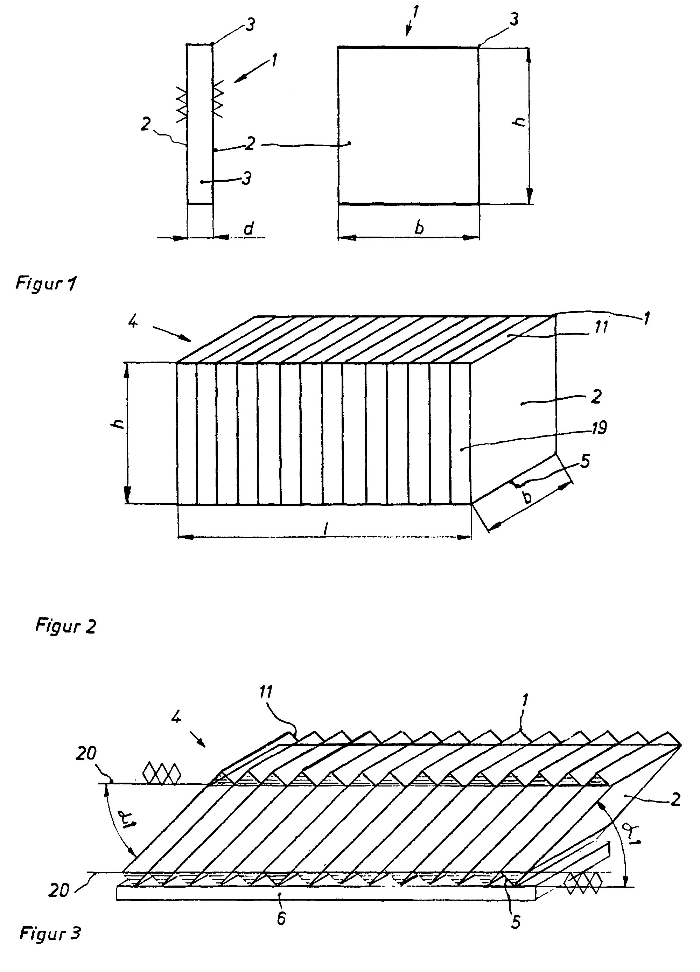

Die Figuren 1 bis 7 zeigen die einzelnen Fertigungsstufen zur Herstellung von Mikroprismen im Klebeverfahren.
**Figur 1** zeigt eine einzelne Platte 1. Die Plattenflächen 2 sind zueinander parallel und plan feingeschliffen. Die Plattengröße sollte möglichst groß gewählt werden; eine große Breite b, um möglichst viele Einzelprismen zu erhalten, und eine große Höhe h, um möglichst viele Bearbeitungszyklen mit genauen Prismenwinkeln durchführen zu können. Die Seitenflächen 3 sind zugeschnitten.
Bei einer Dicke d von 1 mm werden dreißig dieser Platten 1 mit ihren feingeschliffenen Plattenflächen 2 durch ein schmelzfähiges Halterungsmittel miteinander so verbunden, daß ein Block 4 gemäß **Figur 2** entsteht. Die Platten werden beim Zusammenkleben mit ihren Plattenflächen 2 parallel zueinander ausgerichtet. Die Seitenflächen 3, die nachfolgend als Auflagefläche 5, Deckfläche 11 und Ausrichtfläche 19 bezeichnet werden, werden so feingeschliffen, daß diese Seitenflächen im rechten Winkel zu den Plattenflächen 2 liegen. Dabei wird das Maß h zwischen der Auflagefläche 5 und der Deckfläche 11 genau über die Länge des Blocks 4 eingeschliffen.
Wichtig ist, daß zwischen der Plattenfläche 2 und der Auflagefläche 5 bzw. der Deckfläche 11 eine scharfe Kante zur späteren Ausrichtung der Platten 1 im Block 4 entsteht.

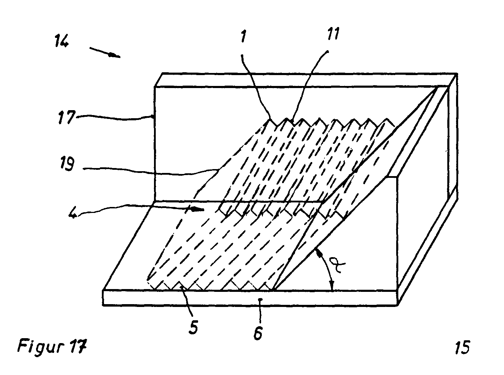

Der so vorbereitete Block 4 wird gemäß **Figur 3** im erwärmten Zustand auf eine Ausrichtplatte 6 einer Winkel-Einstell-Vorrichtung 14 (siehe Figur 17) aufgelegt und die Platten 1 werden so verschoben, daß alle Platten an einem Winkelnormal 15 nach dem Winkel α₁ ausgerichtet sind.
Dabei liegen alle vorgeschobenen scharfen Kanten, die durch die Plattenflächen 2 und die Auflageflächen 5 gebildet werden, auf der planen Oberfläche der Ausrichtplatte 6 an und eine frei liegende Plattenfläche 2 des Blocks liegt an der Fläche des Winkelnormals 15 an. Damit erhalten alle Platten 1 eines Blocks 4 eine gleiche Schräglage.
Mehrere verschobene und abgekühlte Blöcke mit einer gleichen Höhe h werden mit der Seite ihrer Deckflächen 11 so auf einem Trägerkörper aufgekittet, daß die Seite der Blöcke mit den Auflageflächen 5 zur Bearbeitung frei liegt (nicht dargestellt). Die Blöcke 4 werden gemeinsam durch Schleifen und Polieren bis zur Polierebene 20 bearbeitet.

Wegen der vorhandenen Symmetrie können zuerst an der Seite der Auflageflächen 5 erste optisch wirksame Flächen 8 angearbeitet werden und nach dem Umkitten der Blöcke 4 auf die Seite der Auflageflächen 5 können an der Deckfläche 11, gleiche Bearbeitungsschritte durchgeführt werden. Dabei werden gleiche Prismen erhalten.

Werden an den verschobenen Blöcken in der Polierebene 20 plane Flächen hergestellt, schließen die Plattenflächen 2 der Platten 1 scharfkantig an die erste optisch wirksame Fläche 8 an (siehe Figur 8).

Werden die hervorstehenden Spitzen der verschobenen Platten des Blocks nicht vollständig abgearbeitet, entsteht eine erste optisch wirksame Fläche 8, die mit einer Seite scharf an die verbliebene restliche Auflagefläche 5, bzw. die Deckfläche 11 angrenzt (siehe Figur 9). In diesem Fall können bei Bedarf die Auflagefläche 5 (bzw. die Deckfläche 11) vor dem Verschieben der Platten im Block (siehe Figur 2) poliert werden.
Die in Figur 3 dargestellten und oben beschriebenen Verfahrensschritte können mit beliebigen verschiedenen Winkeln α im Bereich zwischen den Extremwerten 0° und 180° wiederholt werden, um zweite optisch wirksame Flächen 12 anzuarbeiten.

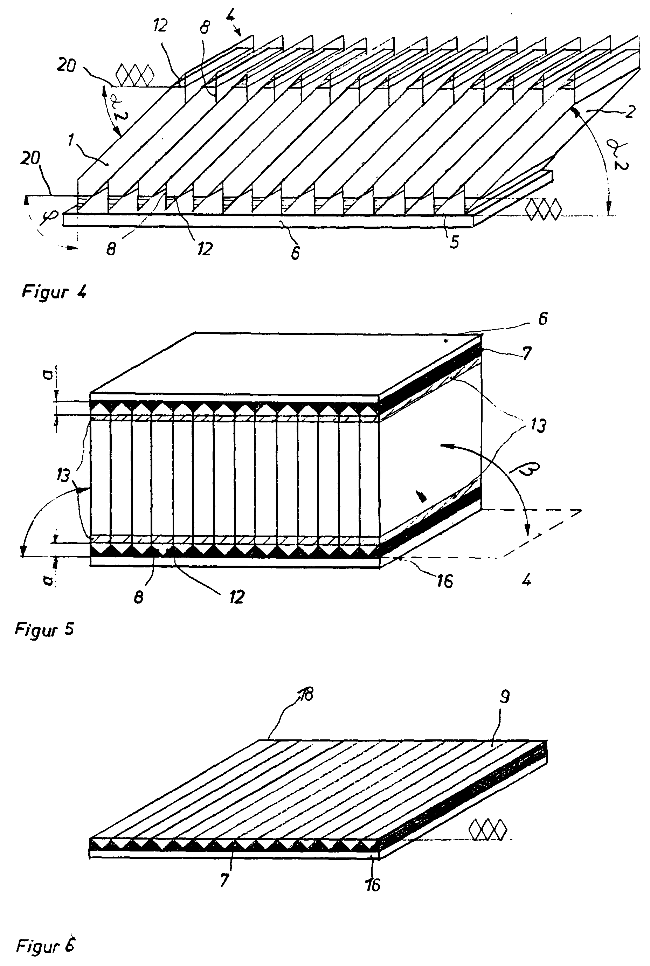

In **Figur 4** ist die Bearbeitung einer zweiten optisch wirksamen Fläche 12 dargestellt. Im Beispiel wird der Winkel α₂ gefertigt, der gleich dem Winkel α₁ ist. Der Prismenwinkel ϕ ergibt sich aus dem Winkel α₁ plus α₂. Die Polierebene 20 ist so gelegt, daß gleichschenklige Prismenflächen entstehen.
Nach der Bearbeitung der letzen optisch wirksamen Fläche werden die Plattenflächen 2 der Platten 1 eines Blocks 4 erwärmt und nach einem Winkel β ausgerichtet, der im Beispiel 90° zur planen Fläche der Hilfsplatte 16 ist, um gleichschenklige Prismen zu erhalten (siehe Figur 11).

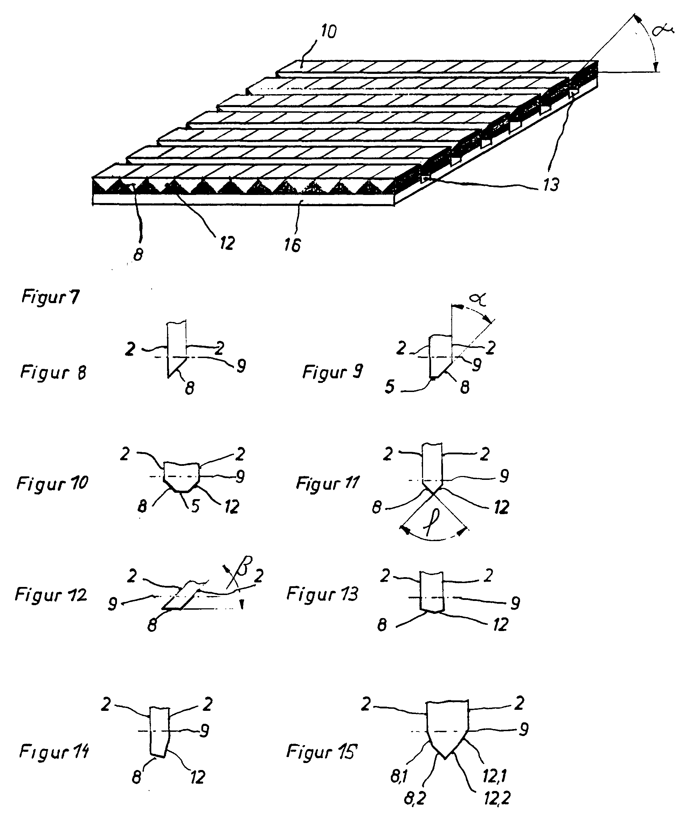

Gemäß **Figur 5** werden auf den Seiten des Blocks, die die optisch wirksamen Flächen tragen, Hilfsplatten 16 mit einem Halterungsmittel 7 befestigt.
In einem Abstand a von jeder Hilfsplatte 16 wird ein Sägeschnitt 13 parallel zur Hilfsplatte 16 ausgeführt. Der Abstand a ist so bemessen, daß Prismenstreifen 18 entstehen, die im Beispiel keine Reststücke von Plattenflächen 2 mehr haben. Die entstehenden Schnittflächen 9 sind die Hypothenuseflächen der Prismenstreifen 18, die nachfolgend im Verbund mit der Hilfsplatte 16 poliert werden (**Figur 6**).
Nachfolgend werden die auf die Hilfsplatte 16 gekitteten Prismenstreifen 18 im Schneid-Winkel γ, der im Beispiel 90° ist, in Prismen zersägt (**Figur 7**). Der Schneid-Winkel γ bestimmt die Winkellage dieser geschnittenen Flächen zu den Flächen 2, 8, 9 und 12.

Wird die Hilfsplatte, von der Seite der Prismenstreifen 18 her, nur angesägt, können nach dem Einlegen der Hilfsplatte in ein Lösungsmittel für das Halterungsmittel einzelne Mikroprismen entnommen werden.
Wird die Hilfsplatte mit den tragenden Mikroprismen durchgesägt, sind die fest auf dem Streifen der Hilfsplatte befestigten Mikroprismen so gehaltert, daß im Bedarfsfall die geschnittenen Flächen (vordere und die hintere Dreiecksfläche) durch Schleifen und/oder Polieren bearbeitbar sind.

Die Figuren 8 bis 15 stellen einige Beispiele von Prismenformen vor, die mit Hilfe des erfindungsgemäßen Verfahrens herstellbar sind.
Bei allen Prismen können im Bedarfsfall die in der Ansicht dargestellte Vorderfläche und die Rückfläche so bearbeitet sein, daß diese optisch wirksame Flächen sind. Gemäß **Figur 8** können die Plattenfläche 2, die erste optisch wirksame Fläche 8 und die Schnittfläche 9 optisch wirksame Flächen sein.
In Figur **9** ist zusätzlich die Auflagefläche 5 eine optisch wirksame Fläche.
In **Figur 10** ist zusätzlich die zweite optisch wirksame Fläche 12 angearbeitet.
**Figur 11** stellt ein gleichschenkliges Prisma dar, daß die erste optisch wirksame Fläche 8 und die zweite optisch wirksame Fläche 12 hat. Auch hier kann die Schnittfläche 9 eine optisch wirksame Fläche sein.
Bei dem in **Figur 12** dargestellten Prisma ist der Winkel β zwischen der Plattenfläche 2 und der Hilfsplatte 16 (nach Figur 5) ungleich 90°. Der zur Hilfsplatte 16 parallele Sägeschnitt 9 erzeugt ein parallelogrammförmiges Prisma mit den Flächen 2, 8, 2 und 9, die je nach Bedarf optisch wirksame Flächen sind.
**Figur 13** zeigt ein Prisma mit den Flächen 2, 8, 12, 2 und 9, die je nach Bedarf optisch wirksame Flächen sind.

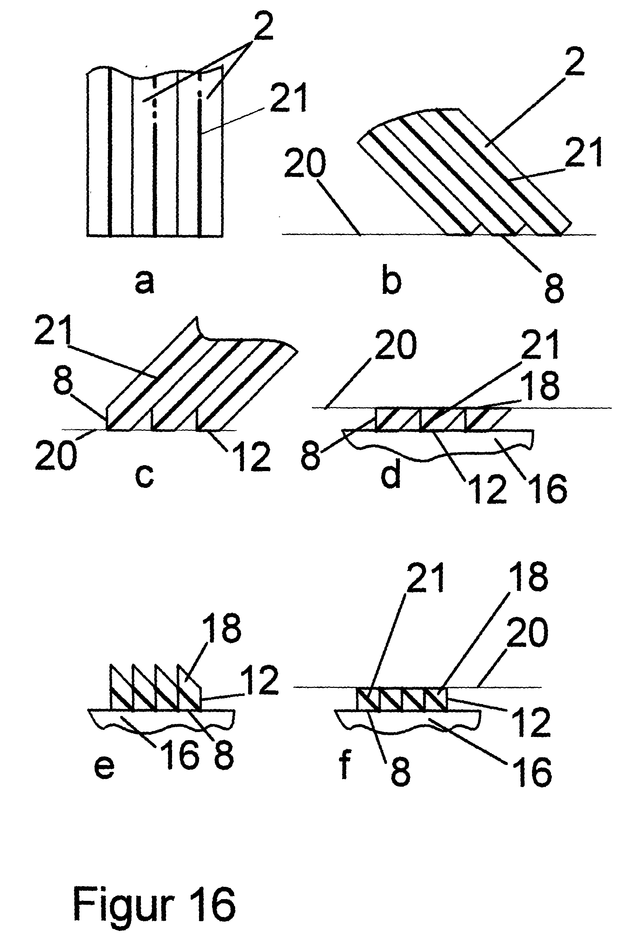

**Figur 14** zeigt ein Prisma mit den Flächen 2, 8, 12 und 9.
**Figur 15** zeigt ein Prisma mit den Flächen 2, 8.1, 8.2, 5, 12.1, 12.2, 2 und 9.
Durch verschiedene Winkelstellungen α werden die ersten optisch wirksamen Flächen 8.1, 8.2 und die zweiten optisch wirksamen Flächen 12.1, 12.2 hergestellt.
Die in den Figuren 8 bis 15 dargestellten Möglichkeiten zur Gestaltung der Prismenform sind keinesfalls vollständig. Die Formen können miteinander kombiniert werden und abgewandelt sein.
Die Darstellungen vermitteln eine Auswahl der vielfältigen Möglichkeiten zur Herstellung von Prismen, die mit Hilfe des erfindungsgemäßen Verfahrens erfolgt.

**Figur 16** zeigt schematisch die Bearbeitungsschritte zur Herstellung von Strahlungsteilern.
Figur 16 a zeigt einen Verbund von gegeneinander verschiebbaren Plattenpaaren 2, die eine transparente Schicht 21 einschließen. Figur 16 b zeigt die verschobenen Plattenpaare 2, an denen eine erste optisch wirksame Fläche 8 fertig bearbeitet (poliert) ist.
Figur 16 c zeigt die Stellung der Plattenpaare nach dem Umkitten in einem anderen Winkel und mit einer zweiten, durch Schleifen und Polieren fertig bearbeiteten optisch wirksamen Fläche 12.
Gemäß Figur 16 d werden die zweiten optischen Flächen 12 der Plattenpaare auf eine Hilfsplatte 16 aufgekittet. Durch einen Sägeschnitt, nachfolgendes Schleifen und Polieren wird in der Polierebene 20 eine dritte optisch wirksame Fläche hergestellt. Wenn die Außenflächen der Platten optische Qualität haben, werden nach dem Durchtrennen der Prismenstreifen 18 - waagerecht zur Zeichenebene - einzelne Strahlungsteiler erhalten, die im binokularen Tubus Verwendung finden können.
Ein Strahlteilerwürfel nach Figur 16 f wird erhalten, indem eine vierte optische Fläche bearbeitet wird, indem die Prismenstreifen nachFigur 16 d vereinzelt und mit ihren ersten optischen Flächen auf eine weitere Hilfsplatte 16 gekittet werden, wie in Figur 16 e gezeigt wird. Nach dem Schleifen und Polieren in der Polierebene 20 werden die Prismenstreifen 18 in der Ebene der Zeichnung zersägt und einzelne Strahlteilerwürfel erhalten.

**Figur 17** zeigt die Vorrichtung zum Ausrichten der Blöcke 4 nach dem Winkel α. Die Winkel-Einstell-Vorrichtung 14 besteht aus einer planen Ausrichtplatte 6, auf der das Winkelnormal 15 aufliegt. Zur seitlichen Ausrichtung der Platten 1 eines Blocks 4 hat die Winkel-Einstell-Vorrichtung 14 einen Anschlag 17. An dem Anschlag 17 werden die Platten 1 mit ihren Ausrichtflächen 19 ausgerichtet.
Eine Plattenfläche 2 einer Platte 1 liegt auf dem Winkelnormal 15 auf. Eine scharfe Kante, die durch die Plattenfläche 2 und die Auflagefläche 5 gebildet wird, liegt auf der Oberfläche der Ausrichtplatte 6 an. Die weiteren Platten 1 liegen mit ihren Plattenflächen 2 aneinander und erhalten auf diese Weise eine gleiche Ausrichtung.

Das Verfahren wurde am Beispiel von Mikroprismen beschrieben. Es ist aber durchaus auch für die Herstellung von Prismen geeignet, die üblicherweise hergestellt werden und deren Abmessungen in der Dimension von Zentimetern liegen.

### Bezugszeichen

- 1: Platte, Plattenpaar
- 2: Plattenfläche
- 3: Seitenfläche
- 4: Block
- 5: Auflagefläche
- 6: Ausrichtplatte
- 7: Halterungsmittel
- 8: erste optisch wirksame Fläche
- 9: Schnittfläche (Hypothenuse)
- 10: Mikroprisma
- 11: Deckfläche
- 12: zweite optisch wirksame Fläche
- 13: Sägeschnitt
- 14: Winkel-Einstell-Vorrichtung
- 15: Winkelnormal
- 16: Hilfsplatte
- 17: Anschlag
- 18: Prismenstreifen
- 19: Ausrichtfläche
- 20: Polierebene
- 21: transparente Schicht
- a: Abstand
- b: Breite der Platte
- d: Dicke der Platte
- h: Höhe der Platte
- l: Länge des Blocks
- α: Winkel zwischen Plattenfläche (2) und Auflagefläche (5)
- β: Winkel zwischen Plattenfläche (2) und Oberfläche der Hilfsplatte (16)
- ϕ: Prismenwinkel
- γ: Schneid-Winkel

## Patentansprüche

1. Verfahren zur Herstellung von Prismen, insbesondere Mikroprismen und Strahlungsteilern, aus rechteckigen planparallelen Platten (1) bei dem
a) eine Mehrzahl dieser Platten (1) übereinander auf ihren Plattenflächen (2) gestapelt und dabei an mindestens zwei ihrer Seitenflächen und an den Plattenflächen (2) zu einem rechteckigen Block (4) ausgerichtet werden,
b) alle Platten (1) des Blockes (4) derart schräggelegt und fixiert werden, dass die Platten (1) des Blockes (4) mit ihrer von einer Auflagefläche (5) und einer Plattenfläche (2) gebildeten Seitenkante auf einer planen Ausrichtplatte (6) aufliegen und alle Plattenflächen (2) einen vorgegebenen ersten Winkel (α₁) relativ zur planen Oberfläche der Ausrichtplatte (6) einnehmen,
c) ein Trägerkörper auf mehrere derartige Blöcke (4) auf eine der beiden eine treppenartige Struktur aufweisenden Seiten aufgebracht und aufgekittet wird,
d) die auf der freiliegenden Seite mit treppenförmiger Struktur der Blöcke (4) vorstehenden Teile der einzelnen Platten (1) zur Bildung optisch wirksamer Flächen geschliffen und poliert werden,
e) alle Platten (1) der einzelnen Blöcke (4) so neu angeordnet werden, dass sich alle Plattenflächen (2) eines Blockes (4) in einem vorgegebenen zweiten Winkel (β) relativ zur planen Oberfläche einer Hilfsplatte (16) befinden,
f) die Hilfsplatte (16) an die Seite mit den optisch wirksamen Flächen (8,12) der einzelnen Platten (1) auf der Oberfläche der Hilfsplatte (16) aufliegen,
g) eine Platte von Prismenstreifen (18) aus dem Block abgesägt wird und
h) einzelne Prismen (10) durch Sägen der Prismenstreifen (18) mit zueinander parallelen Schnitten (13) in einem vorgegebenen Winkel (γ) zur Längsrichtung der Prismenstreifen (18) abgetrennt und die Prismen (10) von der Hilfsplatte (16) abgelöst werden,
**dadurch gekennzeichnet,**
**dass** die Verfahrensschritte a) bis d) mindestens zweimal wiederholt werden, wobei beim Verfahrensschritt b) jeweils verschiedene Winkel (α2) der Platten (1) und beim Verfahrensschritt d) jeweils weitere optisch wirksame Flächen erzeugt werden, und dass die Prismenstreifen (18) in einer Ebene parallel zur Ebene der Hilfsplatte (16) abgesägt werden, wobei der Abstand der Sägeebene zu den vorstehenden Teilen der optisch wirksamen Flächen auf der Hilfsplatte (16) der Höhe der Prismen (10) entspricht.

2. Verfahren nach Anspruch 1,
**dadurch gekennzeichnet,**
**dass** die Herstellung der Plattenflächen (2) durch Feinschleifen oder durch Feinschleifen und Polieren erfolgt.

3. Verfahren nach Anspruch 1,
**dadurch gekennzeichnet,**
**dass** die gemäß Verfahrensschritt a) übereinander gestapelten Platten (1) mittels eines schmelzfähigen Halterungsmittels oder durch Ansprengen zu dem Block (4) fixiert werden.

4. Verfahren nach Anspruch 1,
**dadurch gekennzeichnet,**
**dass** die Neuanordnung der Platten (1) gemäß dem Verfahrensschritt e) nach einem Erwärmen des Blocks (4) durch Verschieben der einzelnen Platten (1) oder durch Vereinzeln der Platten des Blocks (4) und erneutes Ansprengen erfolgt.

5. Verfahren nach Anspruch 1,
**dadurch gekennzeichnet,**
**dass** der Winkel (β) der Neuanordnung gemäß Verfahrensschritt e) gleich 90 Grad ist, so dass die Dicke jeder Platte (1) der Hypothenuse des späteren Prismas entspricht.

6. Verfahren nach Anspruch 1,
**dadurch gekennzeichnet,**
**dass** zusätzlich zu den Seitenflächen der auf der Ausrichtplatte (6) aufliegenden Seitenkanten auch die gegenüberliegende und/oder eine andere Seitenfläche (Deckfläche 11, Ausrichtfläche 19) durch Feinschleifen oder durch Feinschleifen und Polieren so bearbeitet werden, dass diese Fläche im rechten Winkel zu den Plattenflächen (2) ist.

7. Verfahren nach Anspruch 1,
**dadurch gekennzeichnet,**
**dass** die Sägeschnitte (13) gemäß Schritt j) im rechten Winkel (Schneid-Winkel γ) zum Prismenstreifen (18) erfolgen.

8. Verfahren nach Anspruch 1,
**dadurch gekennzeichnet,**
**dass** nach dem Abschneiden der Platte aus Prismenstreifen (18) die freiliegenden Schnittflächen (9) (Hypothenuse) der Prismenstreifen (18) im Verbund mit der Hilfsplatte (16) durch Schleifen und Polieren bearbeitet werden.

9. Verfahren nach Anspruch 1,
**dadurch gekennzeichnet,**
**dass** bei dem Verfahrensschritt h) die Hilfsplatte (16) von der Seite der Prismenstreifen (18) her nur angesägt wird oder die Hilfsplatte (16) durchgesägt wird und die die einzelnen Prismen tragenden Streifen so auf einem Trägerkörper befestigt werden, dass die bisher nicht bearbeitbaren Prismen-Seitenflächen durch Schleifen und/oder Polieren bearbeitet werden können.

10. Verfahren nach Anspruch 1,
**dadurch gekennzeichnet,**
**dass** jeweils zwei Platten nicht verschiebbar miteinander verbunden werden und ein Plattenpaar (2) bilden, wobei zwischen den starr miteinander verbundenen Plattenflächen eine dünne Schicht (21) eingebettet wird und jeweils angrenzende Plattenpaare gegeneinander verschiebbar sind.

## Claims

1. Process for making prisms, in particular microprisms and beam splitters, from rectangular plane-parallel slabs (1) in which
a) a plurality of these slabs (1) are stacked on top of one another on their slab faces (2) and are aligned on at least two of their side faces and on the slab faces (2) into a rectangular block (4),
b) all the slabs (1) of the block (4) are laid diagonally and fixed in such a way that the slabs (1) of the block (4) are supported with their side edge, formed from a support face (5) and a slab face (2), on a flat alignment slab (6) and all the slab faces (2) take up a pre-determined first angle (α₁) relative to the flat surface of the alignment slab (6),
c) a carrying body is attached and pasted on to several blocks (4) of this kind on one of the two sides having a stepped structure,
d) the parts of the individual slabs (1) projecting on the open side of the blocks (4) which has the stepped structure are ground and polished to form optically effective faces,
e) all the slabs (1) of the individual blocks (4) are rearranged so that all the slab faces (2) of a block (4) are located at a pre-determined second angle (β) relative to the flat surface of an auxiliary slab (16),
f) the auxiliary slab (16) is pasted to the side of the respective block (4) with the optically effective faces (8, 12), wherein the projecting parts of the optically effective faces (8, 12) of the individual slabs (1) are supported on the surface of the auxiliary slab (16),
g) a slab of prism strips (18) is sawn off the block and
h) individual prisms (10) are separated by sawing the prism strips (18) with cuts (13) parallel to one another at a pre-determined angle (γ) to the longitudinal direction of the prism strips (18) and the prisms (10) are removed from the auxiliary slab (16), **characterised in that**
steps a) to d) of the process are repeated at least twice, wherein with step b) of the process in each case different angles (α₁) of the slabs (1) and with step d) of the process in each case further optically effective faces are generated, and the prism strips (18) are sawn off in a plane parallel to the plane of the auxiliary slab (16), wherein the distance of the sawing plane from the projecting parts of the optically effective faces on the auxiliary slab (16) corresponds to the height of the prisms (10).

2. Process according to Claim 1, **characterised in that**
the slab faces (2) are produced by precision-grinding or by precision-grinding and polishing.

3. Process according to Claim 1, **characterised in that**
the slabs (1) stacked on top of one another according to step a) of the process are fixed by means of a holding means capable of fusing or by blasting to the block (4).

4. Process according to Claim 1, **characterised in that**
the new arrangement of the slabs (1) according to step e) of the process takes place after warming the block (4) by shifting the individual slabs (1) or by scattering the slabs of the block (4) and re-blasting.

5. Process according to Claim 1, **characterised in that**
the angle (β) of the new arrangement according to step e) of the process is equal to 90 degrees, so the thickness of each slab (1) corresponds to the hypotenuse of the later prism.

6. Process according to Claim 1, **characterised in that**
in addition to the side faces of the side edges resting on the alignment slab (6) also the opposite and/or another side face (top face 11, alignment face 19) are worked in such a way by precision-grinding or by precision-grinding and polishing that this face is at right angles to the slab faces (2).

7. Process according to Claim 1, **characterised in that**
the saw cuts (13) according to step j) take place at right angles (cutting angle γ) to the prism strip (18).

8. Process according to Claim 1, **characterised in that**
after the slab has been cut from prism strips (18) the open cutting faces (9) (hypotenuse) of the prism strips (18) are worked in conjunction with the auxiliary slab (16) by grinding and polishing.

9. Process according to Claim 1, **characterised in that**
with step h) of the process the auxiliary slab (16) is cut into or sawn through only from the side of the prism strips (18) and the strips carrying the individual prisms are fastened on to a carrying body in such a way that the prism side faces not yet worked can be shaped by grinding and/or polishing.

10. Process according to Claim 1, **characterised in that**
in each case two slabs are connected to one another so as not to be movable and form one pair of slabs (2), wherein a thin layer (21) is embedded between the slab faces rigidly connected to one another and respectively adjacent slab pairs are movable with respect to one another.

## Revendications

1. Procédé de fabrication de prismes, en particulier de prismes et de séparateurs de rayonnement, à partir de plaques rectangulaires (1) à faces planes et parallèles, dans lequel
a) plusieurs de ces plaques sont empilées l'une sur l'autre sur leurs surfaces (2) de plaques et sont orientées à au moins deux de leurs surfaces latérales et aux surfaces (2) de plaques pour former un bloc rectangulaire (4),
b) toutes les plaques (1) du bloc (4) sont disposées en oblique et fixées d'une manière telle que les plaques (1) du bloc (4) reposent sur une plaque plane d'orientation plane par leur arête latérale constituée d'une surface d'appui (5) et d'une surface (2) de plaque, et toutes les surfaces (2) de plaques sont disposées selon un premier angle prédéfini (α₁) par rapport à la surface plane de la plaque d'orientation (6),
c) un corps porteur est monté et luté sur plusieurs blocs (4) de ce type sur l'un des deux côtés à structure en escalier,
d) les parties des plaques individuelles (1) qui se trouvent en saillie sur le côté libre à structure en escalier des blocs (4) sont rectifiées et polies pour former des surfaces à effet optique,
e) toutes les plaques (1) des blocs individuels (4) sont repositionnées d'une manière telle que toutes les surfaces (2) de plaques d'un bloc (4) sont disposées selon un deuxième angle prédéterminé (β) par rapport à la surface plane d'une plaque auxiliaire (16),
f) la plaque auxiliaire (16) est lutée sur le coté comportant les surfaces (8, 12) à effet optique du bloc respectif (4), les parties en surplomb des surfaces (8,12) à effet optique des plaques individuelles (1) reposant sur la surface de la plaque auxiliaire (16),
g) une plaque de bandes (18) de prismes (18) est sciée à partir du bloc, et
h) des prismes individuels (10) sont séparés par sciage des bandes (18) de prismes au moyen de découpes parallèles entre elles (13) selon un angle prédéfini (γ) par rapport à la direction longitudinale des bandes (18) de prismes et les prismes (10) sont séparés de la plaque auxiliaire (16),
**caractérisé en ce que**
les étapes a) à d) du procédé sont répétées au moins deux fois, en engendrant chaque fois des angles différents (α₂) des plaques (1) à l'étape b) et en engendrant chaque fois d'autres surfaces à effet optique à l'étape d), et **en ce que** les bandes (18) de prismes sont sciées dans un plan parallèlement au plan de la plaque auxiliaire (16) d'une façon telle que la distance entre le plan de sciage et les éléments en saillie des surfaces à effet optique sur la plaque auxiliaire (16) correspond à la hauteur du prisme (10).

2. Procédé selon la revendication 1,
**caractérisé en ce que**
la fabrication des surfaces (2) de plaques s'effectue par rectification ou par rectification et polissage.

3. Procédé selon la revendication 1,
**caractérisé en ce que**
les plaques (1) empilées les unes sur les autres à l'étape a) sont fixées, pour former le bloc (4), à l'aide d'un moyen de maintien fusible ou par verrouillage par ressort.

4. Procédé selon la revendication 1,
**caractérisé en ce que**
le repositionnement des plaques (1) s'effectue à l'étape e), après chauffage du bloc (4), par glissement des plaques individuelles (1) ou par séparation des plaques du bloc (4) et nouveau verrouillage par ressort.

5. Procédé selon la revendication 1,
**caractérisé en ce que**
l'angle (β) du repositionnement de l'étape e) est de 90 degrés, de sorte que l'épaisseur de chaque plaque (1) correspond à l'hypoténuse du prisme ultérieur.

6. Procédé selon la revendication 1, **caractérisé en ce que**
en plus des faces latérales des arêtes latérales reposant sur la plaque d'orientation (6), la surface latérale opposée et/ou une autre surface latérale (surface supérieure (11), surface d'orientation (19)) sont aussi usinées par rectification ou par rectification et polissage de façon que cette surface forme un angle droit par rapport aux surfaces (2) de plaque.

7. Procédé selon la revendication 1,
**caractérisé en ce que**
les découpes de scie (13) de l'étape j) sont effectuées à angle droit (angle de coupe γ) par rapport aux bandes (18) de prismes.

8. Procédé selon la revendication 1,
**caractérisé en ce que**
après la découpe de la plaque en bandes (18) de prismes, les surfaces de coupe libres (9) (hypoténuse) des bandes (18) de prismes assemblées à la plaque auxiliaire (16) sont usinées par rectification et polissage.

9. Procédé selon la revendication 1,
**caractérisé en ce que**
lors de l'étape h) de procédé, la plaque auxiliaire (16) n'est sciée qu'à partir du côté des bandes (18) de prismes ou la plaque auxiliaire (16) est complètement sciée, et les bandes qui portent les prismes individuels sont attachées sur un corps porteur d'une manière telle que les surfaces latérales de prismes qui ne pouvaient pas être usinées jusqu'ici peuvent être usinées par rectification et/ou polissage.

10. Procédé selon la revendication 1,
**caractérisé en ce que**
deux plaques sont assemblées l'une à l'autre sans coulissement possible et forment une paire (2) de plaques et une mince couche est incorporée entre les deux surfaces de plaques assemblées rigidement l'une à l'autre, et des paires respectivement adjacentes de plaques peuvent coulisser l'une par rapport à l'autre.
